# EUROPEAN PATENT SPECIFICATION

(11) **EP 3 939 841 B1**
(45) Date of publication and mention of the grant of the patent: **25.03.2026**
(21) Application number: 20186462.6
(22) Date of filing: 17.07.2020
(51) Int. Cl.: B60T 7/12, B60T 17/18

(54) **AN ACTUATOR FOR A WHEEL BRAKE UNIT OF A VEHICLE**
AKTUATOR FÜR EINE RADBREMSEINHEIT EINES FAHRZEUGS
ACTIONNEUR POUR UNE UNITÉ DE FREIN DE ROUE D'UN VÉHICULE

(43) Date of publication of application: 19.01.2022
(73) Proprietor: KNORR-BREMSE Systeme für Nutzfahrzeuge GmbH, 80809 München (DE)
(72) Inventor: KOKREHEL, Csaba, 1119 Budapest (HU); BLESSING, Michael, 80687 München (DE); SZABO, Janos, 1042 Budapest (HU); MLINÁRCSEK, Csaba, 1165 Budapest (HU); NEMETH, Huba, 1116 Budapest (HU)

(56) References cited:
- EP-A1- 3 118 071
- JP-A- 2019 081 465
- US-A1- 2005 029 864
- US-B2- 10 023 170

## Description

The present invention relates to an electro-mechanic actuator for a wheel brake unit of a vehicle, to a wheel brake unit with such an actuator, to a method for performing a safety actuation for a wheel brake unit of a vehicle, and in particular to an electro-mechanic brake with an integrated energy storage.

Today electro-pneumatic brake actuators are commonly employed on commercial vehicles. In most cases such actuators make use of a pneumatic energy source via pneumatic cylinders, and provide both service and parking brake actuation. The actuator of the parking brake function is usually different from the actuator providing the service brake, and the two actuators can be operated independently. Parking brake actuators often involve a spring, whose tension directly provides the energy to brake the vehicle and to hold it in place. In cases of emergency, a single brake actuation may be performed even without pressurized air as energy source only by utilizing the spring-based parking brake actuator design. If pressure is lost in the system, the pre-tensioned spring in the parking brake chamber provides enough brake energy to stop the vehicle, or to hold it at standstill.

Another example for a class of brake actuators operates in an electro-mechanic way. The advent of electric vehicles has increased the probability that such electro-mechanic brake actuators will become more widespread in the near future. Electro-mechanic actuators are characterized by an electric motor, whose driving torque is generically turned into a linear force via a suitable gear. The electric motor is usually driven by an electric power supply providing energy from the main energy source of the vehicle.

Examples of electro-mechanic actuators in brake units may be found e.g. in EP 1977134 B1, which discloses a self-energizing commercial vehicle wheel brake with an electro-mechanic actuator comprising an electronic control module. A functionally similar brake unit is disclosed in WO 2019/185890 A1, again performing an electro-mechanic actuation by means of an electric motor, equipped with an electromagnetic clutch for providing a parking brake function, and comprising an electronic control module positioned together with the motor within a motor housing. US 2019/0118790 A1 discloses a further disc brake actuator for a vehicle, in which a torque of an electrical drive is translated by a threaded transmission system in series with a ball-ramp transmission system for service brake application, and in which an electro-mechanic fixing unit for a parking brake feature is included. CN 109899413 discloses a heavy-duty floating caliper brake with an electric motor for service brake and a pre-tensioned coil spring for parking brake application, wherein the spring rotates together with the motor for service brake application and disengages via an electro-magnetic clutch when the parking brake application is required. CN109869424 discloses another heavy-duty floating caliper brake with electric motor for service brake and pre-tensioned planar coil spring for parking brake application. The spring again rotates together with the motor for service brake application, and disengages via an electro-magnetic clutch when the parking brake application is required. For parking brake application, an external energy source is needed to disengage the clutch.

As many actuators, and in particular electro-mechanic actuators, rely on energy obtained from elsewhere in the vehicle, they are by themselves ill-suited for emergency situations, or whenever a last single actuation - either for applying or for releasing the brake - is required in a situation where the connection to the power supply is unavailable. In many electro-mechanic actuators, energy from the power supply is temporarily stored in intermediate steps of the actuation process, as can be understood e.g. from WO 2019/185917 A1, which discloses a commercial vehicle wheel brake with electro-mechanic actuator, an electromagnetic clutch for parking brake application, and a motor control module containing a circuit board with energy storing capacitors arranged in a connected array at a position remote from the circuit board. Further along these lines, auxiliary energy supplies, intended e.g. to maintain a constant brake force over a standstill period, are known in the state of the art. However, such a temporary or auxiliary storage of energy is not reliable and/or does not provide sufficient power to guarantee an actuation of the brake in order to stop the vehicle if the power supply breaks down.

Similarly, JP 2019 081465 A discloses a vehicle with a brake-by-wire system with a main power supply which in case of a failure may be supported or replaced by a further auxiliary power supply. EP 3 118 071 A1 discloses a vehicle with a safety brake device comprising a pressure storage canister adapted to release power to enable a hydraulic brake system of the vehicle to activate the wheel brakes. US 2005/00029864 A1 discloses an emergency braking device of a vehicle where the parking spring brake actuators act as emergency brakes. US 10 023 170 B2 discloses a vehicle with a hydraulic braking device and an electro-mechanical braking device, where in a case of failure of the hydraulic braking device a voltage from the vehicle electrical network to the electro-mechanical braking device is increased.

Therefore, there is a demand for an actuator able to perform an actuation to the effect of either applying or releasing the brake in a braking unit for a wheel of a vehicle, in a case where power from the power source employed in normal operation is unavailable.

At least some of the problems of the conventional device as described above are overcome by an actuator of claim 1, a wheel brake unit of claim 8, and a method according to claim 9. The dependent claims refer to further advantageous realizations of the subject matter of the independent claims.

The present invention relates to an actuator for a wheel brake unit of a vehicle, wherein the actuator comprises an actuation element for performing an actuation, and is configured to receive, through a power supply, a power for performing the actuation. The actuator is characterized by a backup energy storage. The backup energy storage is configured to store sufficient energy for causing the actuation element to perform a complete brake actuation at least once, and to provide at least a part of the energy needed by the actuation element to perform the actuation in an emergency situation.

The actuation may cause an application of the service brake or of the parking brake. It may, in particular if the parking brake is being applied, also cause a release of the brake. The actuator is an electro-mechanic actuator, i.e. the actuation element is an electric motor. Storing energy refers to holding back energy, independently from any other flow of energy into or out of the actuator. The energy in the energy storage may be in any form such that the actuation element can be provided with the energy required to perform the actuation. The amount of energy stored should be sufficient to stop the vehicle in any driving situation and bring it to a hold. The energy stored in the backup energy storage should therefore at least suffice to realize the service brake application, but advantageously should also enable the parking brake function.

An emergency situation may, for example, be defined to occur if the actuator has received, during normal use, a request to perform the actuation, and the power either drops or remains below a threshold for a predefined amount of time, to the effect that the motor, in spite of the request, does not or not fully perform the actuation.

The backup energy storage, in particular if it is configured to store electric energy, may be configured to admit charging by energy drawn from the power supply of the actuator. Advantageously, the backup energy storage is rechargeable. The backup energy storage may be recharged periodically, or according to some other scheme. The charge state of the backup energy storage may, either in addition or alternatively to a fixed recharging scheme, be checked by a component of an automated driving system at predefined points in time and/or on the occasion of specific events, as e.g. at start up, after a period of standstill, when a vehicle power source is replenished, or before system shut down.

Optionally, the backup energy storage is configured to receive a signal, and to provide, upon receiving the signal, at least a part of the energy needed by the actuation element to perform the actuation. The signal may, especially in an autonomous vehicle, be produced by some component of an automatic driving system. This may in particular be a Collision Avoidance System, or some other means for operating emergency brake applications. If a driver is present, the signal may also be sent, or requested to be sent, by the driver, in particular in a case where the driver calls for an emergency braking.

Optionally, the electro-mechanical actuator comprises a detection means, configured to detect a power shortage indicative of an emergency situation, and to generate an emergency signal to trigger a generation of the signal. The latter signal, as mentioned before, causes the actuation of the electro-mechanical actuator and may be generated upon a manual interaction of a driver of the vehicle or may be generated by another component of the vehicle. Therefore, according to this embodiment, the initiation of the backup actuation happens in two stages: First there is a detection of an emergency situation (for which the actuation needs the backup energy). After this, when further optional conditions are met, the emergency braking is triggered. The further optional conditions may include a confirmation by a driver or another operating unit or a confirmation of the emergency situation by another control unit. This will ensure that no false alarm results in an emergency braking.

The power shortage indicative of an emergency situation may be tied to an information about a driving status of the vehicle, which the detection means may be configured to receive from some other component of the vehicle, as e.g. from wheel speed sensors or from an automatic driving system.

According to the invention, the actuator is comprised within a housing, and the backup energy storage is included within the housing. While in particular the backup energy storage could in principle also be positioned outside of the actuator housing (e.g. for safety reasons), it is advantageous to place the energy backup in close proximity of the actuation element. Within the actuator housing, measures may be taken for protecting the backup energy storage e.g. from an overheating motor, for example by shielding or by placing the backup energy storage in a particular location.

Optionally, the backup energy storage is configured to store electric energy.

Optionally, if the backup energy storage is configured to store electric energy, this energy is held within devices such as a capacitor, a supercapacitor, an ultracapacitor, or a rechargeable battery.

Optionally, the backup energy storage may however rather be configured to store mechanic energy. This can in particular be in form of a pre-tensioned spring. Storing mechanic energy is advantageous for a backup energy storage in an actuator which is not an electro-mechanic actuator. In particular, the backup energy storage stores backup energy and thus is in general different from the spring chamber of a parking brake. Instead, it is an additional energy storage as backup for the actuation element. The actuation element may be responsible for providing the service brake or the parking brake.

Optionally, if the actuator comprises an electronic control unit, the detection means and/or the backup energy storage may be partially or fully integrated into the electronic control unit.

Embodiments furthermore refer to a wheel brake system, comprising a wheel brake, and an actuator as described above.

The invention further refers to a method for performing a safety actuation for a wheel brake unit of a vehicle, wherein the actuator comprises an actuation element for performing an actuation and is configured to receive, through a power supply, a power for performing the actuation, the method comprising the steps: storing energy sufficient for causing the actuation element to perform a complete brake actuation at least once; and providing energy needed by the actuation element in an emergency situation.

This method may also be implemented in software or a computer program product. Embodiments of the present invention can, in particular, be implemented by software or by a software module in an electronic control unit..

In summary, the present invention provides an actuator for a wheel brake unit of a vehicle, which comprises at least an actuation element as main transforming element for generating the brake force, and a backup energy storage which can accumulate sufficient energy for one single braking of the vehicle even if an external energy supply used for normal operation of the brake unit is not available. The actuator may further comprise an electronic control unit for controlling the actuation element, which may be positioned within any part of the actuator, and may advantageously have a direct connection with the actuation element. The electric control unit may also comprise the backup energy storage. The direction of brake application can be both for a brake force increase or a brake force release process, and may be utilized for a service brake or a parking brake application.

The backup energy storage may be configured to store the necessary energy in electric, mechanic, or other form. Consequently, the energy storage implementation can be in form of one or more capacitors, batteries, or mechanical springs.

Some examples of the systems and/or methods will be described in the following by way of examples only, and with respect to the accompanying figures, in which:
- Fig. 1: depicts an actuator in a wheel brake unit of a vehicle with a backup energy storage to perform an emergency brake actuation.
- Fig. 2: depicts some further details for a wheel brake unit with an electro-mechanic actuator.
- Fig. 3: displays steps of a method for performing a safety actuation for a wheel brake unit of a vehicle.

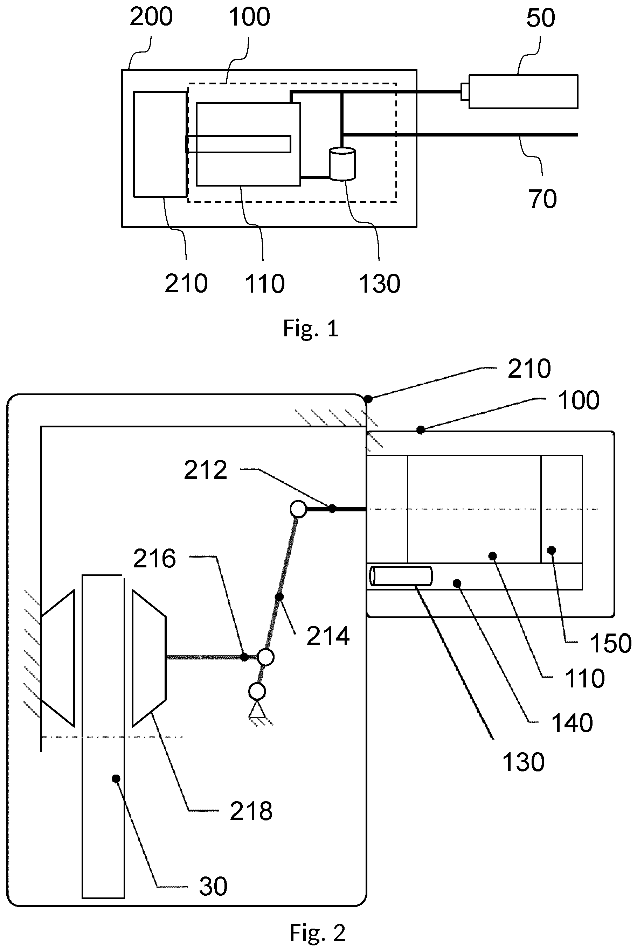

Fig. 1 schematically depicts an actuator 100 in wheel brake unit 200 of a vehicle. The actuator 100 comprises an actuation element 110 for performing an actuation of the brake, by means of a transmission and brake mechanism 210. The actuation element 110 may be an electric motor. In normal use, power for the actuation element 110 is received through a power supply 50. The actuator further comprises a backup energy storage 130. The backup energy storage is configured to receive a signal over the signal input line 70, which may be issued by a driver and/or by another component of the vehicle. The signal may in particular request an emergency actuation from the actuation element 110 causing a brake application or a brake release. In case of an emergency situation, and/or in the case where the backup energy storage 130 receives the signal, the actuation may trigger the service brake or the parking brake.

In addition, a detection means may be configured to detect further signs indicative of an emergency, such as a power drop or fluctuation within a specified time, or a driving status of the vehicle via wheel speed sensors and/or via a component of an automated driving system. Furthermore, the detection means may be configured to receive a control signal over the control signal input line 70, which may be issued by a driver and/or by another component of the vehicle. The control signal may in particular admit an interpretation by the detection means, requesting an actuation from the actuation element 110 causing a brake application or a brake release. Both in the case where the detection means detects a power shortage indicative of an emergency situation, and in the case where the detection means receives a control signal, the actuation may trigger the service brake or the parking brake.

The backup energy storage 130 is configured to store sufficient energy for causing the actuation element 110 to perform a complete brake of the vehicle at least once. The energy should therefore suffice to cause the service brake to fully stop the vehicle. Advantageously, it also suffices for application of the parking brake. The backup energy storage 130 is configured to provide the energy needed by the actuation element 110 to perform the actuation in an emergency situation.

Fig. 2 schematically displays some additional details for an embodiment of an electro-mechanic actuator 100 in a vehicle wheel brake unit. Depicted in the electro-mechanic actuator 100 is an actuation element 110 which is an electric motor, a function for actuation of a parking brake 150, and an electronic control unit 140 for the electric motor 110. The electronic control unit 140 is connected to a local backup energy storage 130, which is placed internally in the actuator 100 and supports at least one brake actuation or deactuation.

The figure provides further details for one particular realization of the transmission and brake mechanism 210 for braking the wheel 30. The transmission and brake mechanism 210 comprises a caliper unit with an internal transmission system, as e.g. a lever 214. A clamping force on the wheel 30 is realized by the electric motor 110 by means of a connection provided by an appropriate actuating element 212 and the lever 214, which is in direct connection with a brake pad push member 216 to operate the brake pad 218.

Under normal operation conditions, the wheel brake actuator 100 utilizes energy from an external energy supply 50 (not depicted in the figure). In case of emergency, the internal backup energy storage 130 can provide sufficient energy to apply the brakes, to perform an emergency braking or an emergency release of the brake.

The present transmission and brake mechanism 210 is to be understood as a particular example. In other embodiments it may be replaced by any other system achieving the effect of braking the wheel 30 via a force derived from the electro-mechanic actuator 100. Thus the electro-mechanic actuator 110 may be part of a different brake unit, as e.g. a drum brake, rather than the brake unit in the depicted embodiment.

A further purpose of the figure is to illustrate how components of the electro-mechanic actuator may be integrated into other components, or realized as executable software code. In the present embodiment, the means for detection may be integrated as a function into the electronic control unit 140, which is in addition configured to provide other services for operating the electric motor 110. Also, the backup energy storage 130 is included in the electronic control unit 140.

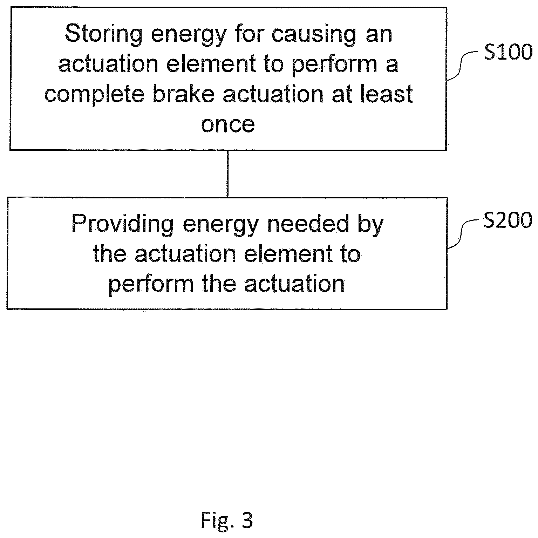

Fig. 3 shows steps of a method for performing a safety actuation for a wheel brake unit 200 of a vehicle, wherein the wheel brake unit 200 comprises an actuator 100 with an actuation element 110 for performing an actuation, and the actuator 100 is configured to receive, through a power supply 50, a power for performing the actuation. One step comprises storing S110 sufficient energy for causing the actuation element 110 to perform a complete brake actuation at least once. This storing of energy occurs locally within a dedicated backup energy storage 130 of the actuator.

A further step is providing S140, in an emergency situation, at least a part of the energy needed by the actuation element 110 to perform the actuation, utilizing the energy stored in the backup energy storage 130.

The method may also be a computer-implemented method. A person of skill in the art would readily recognize that steps of the above-described method may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

The description and drawings merely illustrate the principles of the disclosure.

### LIST OF REFERENCE SIGNS

- 30: wheel
- 50: power supply
- 70: signal input line
- 100: actuator
- 110: actuation element
- 130: backup energy storage
- 140: electronic control unit
- 150: function for actuation of parking brake
- 200: wheel brake unit
- 210: transmission and brake mechanism
- 212: actuating element
- 214: lever
- 216: brake pad push member
- 218: brake pad
- S100, S122, S127, S130, S140: steps of a method

## Claims

1. An electro-mechanic actuator (100) for a wheel brake unit (200) of a vehicle,
wherein the actuator (100) comprises an actuation element (110) for performing an actuation, and is configured to receive, through a power supply (50), a power for performing the actuation,
a backup energy storage (130), configured to store energy sufficient for causing the actuation element (110) to perform a complete brake actuation at least once, and to provide the energy needed by the actuation element (110) in an emergency situation, wherein the actuator comprises a housing, and **characterized in that** the backup energy storage is included within the housing.

2. The actuator (100) of claim 1,
**characterized in that**
the backup energy storage is configured to receive a signal, and to provide, upon receiving the signal, at least a part of the energy needed by the actuation element (110) to perform the actuation.

3. The actuator (100) of claim 2,
**characterized by**
a detection means (120), configured to detect a power shortage indicative of an emergency situation, and to generate an emergency signal to trigger a generation of the signal.

4. The actuator (100) one of the preceding claims,
**characterized in that**
the backup energy storage (130) is configured to store electric energy.

5. The actuator (100) of claim 4,
**characterized in that**
the backup energy storage (130) is configured to store the energy within one or more of the following devices:
- a capacitor,
- a supercapacitor,
- an ultracapacitor,
- a rechargeable battery.

6. The actuator (100) of one of the preceding claims,
**characterized in that**
the backup energy storage (130) stores mechanic energy.

7. The actuator (100) of one of the preceding claims, wherein the actuator (100) comprises an electronic control unit (140),
**characterized in that**
the backup energy storage (130) is integrated into the electronic control unit (140).

8. A wheel brake unit (200), comprising a wheel brake, and
**characterized by**
the actuator (100) of one of the preceding claims.

9. A method for performing a safety actuation for a wheel brake unit (200) of a vehicle, wherein an electro-mechanic actuator (100) comprises an actuation element (110) for performing an actuation and is configured to receive, through a power supply (50), a power for performing the actuation,
and wherein a backup energy storage (130) is comprised within the actuator (100), wherein the actuator (100) comprises a housing, and the backup energy storage (130) is included within the housing,
the method comprising the steps:
storing (S100), within the backup energy storage (130), energy sufficient for causing the actuation element (110) to perform a complete brake actuation at least once;
providing (S200) energy needed by the actuation element (110) in an emergency situation.

## Patentansprüche

1. Elektromechanische Betätigungsvorrichtung (100) für eine Radbremseinheit (200) eines Fahrzeugs, wobei die Betätigungsvorrichtung (100) ein Betätigungselement (110) zum Durchführen einer Betätigung umfasst und so konfiguriert ist, dass sie, durch einen Stromversorgung (50), einen Strom zum Durchführen der Betätigung empfängt,
einen Reserve-Energiespeicher (130), der so konfiguriert ist, dass er ausreichend Energie speichert, um zu veranlassen, dass das Betätigungselement (110) mindestens einmal eine vollständige Bremsbetätigung durchführt, und dass er die von dem Betätigungselement (110) in einer Notsituation benötigte Energie bereitstellt, wobei die Betätigungsvorrichtung ein Gehäuse umfasst, und **dadurch gekennzeichnet, dass** der Reserve-Energiespeicher im Gehäuse eingeschlossen ist.

2. Betätigungsvorrichtung (100) nach Anspruch 1,
**dadurch gekennzeichnet, dass**
der Reserve-Energiespeicher so konfiguriert ist, dass er ein Signal empfängt und, nach Empfangen des Signals, zumindest einen Teil der Energie bereitstellt, die von dem Betätigungselement (110) zum Durchführen der Betätigung benötigt wird.

3. Betätigungsvorrichtung (100) nach Anspruch 2,
**gekennzeichnet durch**
ein Erkennungsmittel (120), das so konfiguriert ist, dass es einen Strommangel erkennt, der auf eine Notfallsituation hinweist, und ein Notfallsignal erzeugt, um eine Erzeugung des Signals auszulösen.

4. Betätigungsvorrichtung (100) nach einem der vorstehenden Ansprüche,
**dadurch gekennzeichnet, dass**
der Reserve-Energiespeicher (130) so konfiguriert ist, dass er Elektroenergie speichert.

5. Betätigungsvorrichtung (100) nach Anspruch 4,
**dadurch gekennzeichnet, dass**
der Reserve-Energiespeicher (130) so konfiguriert ist, dass er die Energie in einer oder mehreren der folgenden Vorrichtungen speichert:
- einem Kondensator,
- einem Superkondensator,
- einem Ultrakondensator,
- einer aufladbaren Batterie.

6. Betätigungsvorrichtung (100) nach einem der vorstehenden Ansprüche,
**dadurch gekennzeichnet, dass**
der Reserve-Energiespeicher (130) mechanische Energie speichert.

7. Betätigungsvorrichtung (100) nach einem der vorstehenden Ansprüche, wobei die Betätigungsvorrichtung (100) eine elektronische Steuereinheit (140) umfasst,
**dadurch gekennzeichnet, dass**
der Reserve-Energiespeicher (130) in die elektronische Steuereinheit (140) integriert ist.

8. Radbremseinheit (200), die eine Radbremse umfasst, und
**gekennzeichnet durch**
die Betätigungsvorrichtung (100) nach einem der vorstehenden Ansprüche.

9. Verfahren zum Durchführen einer Sicherheitsbetätigung für eine Radbremseinheit (200) eines Fahrzeugs, wobei eine elektromechanische Betätigungsvorrichtung (100) ein Betätigungselement (110) zum Durchführen einer Betätigung umfasst und so konfiguriert ist, dass sie, durch eine Stromversorgung (50), einen Strom zum Durchführen der Betätigung empfängt,
und wobei ein Reserve-Energiespeicher (130) in der Betätigungsvorrichtung (100) eingeschlossen ist, wobei die Betätigungsvorrichtung (100) ein Gehäuse umfasst und der Reserve-Energiespeicher (130) in dem Gehäuse eingeschlossen ist,
wobei das Verfahren die folgenden Schritte umfasst:
Speichern (S100), im Reserve-Energiespeicher (130), von Energie, die ausreicht, um zu veranlassen, dass das Betätigungselement (110) mindestens einmal eine vollständige Bremsbetätigung durchführt,
Bereitstellen (S200) der Energie, die von dem Betätigungselement (110) in einer Notsituation benötigt wird.

## Revendications

1. Actionneur électromécanique (100) pour une unité de frein de roue (200) d'un véhicule, dans lequel l'actionneur (100) comprend un élément d'actionnement (110) pour réaliser un actionnement, et est configuré pour recevoir, par l'intermédiaire d'une alimentation électrique (50), une puissance pour réaliser l'actionnement,
un stockage d'énergie de secours (130), configuré pour stocker de l'énergie suffisante pour amener l'élément d'actionnement (110) à réaliser au moins une fois un actionnement de frein complet, et pour fournir l'énergie nécessaire par l'élément d'actionnement (110) dans une situation d'urgence, dans lequel l'actionneur comprend un boîtier, et **caractérisé en ce que** le stockage d'énergie de secours est inclus au sein du boîtier.

2. Actionneur (100) selon la revendication 1,
**caractérisé en ce que**
le stockage d'énergie de secours est configuré pour recevoir un signal et pour fournir, lors de la réception du signal, au moins une partie de l'énergie nécessaire par l'élément d'actionnement (110) pour réaliser l'actionnement.

3. Actionneur (100) selon la revendication 2,
**caractérisé par**
un moyen de détection (120), configuré pour détecter une pénurie de puissance indiquant une situation d'urgence, et pour générer un signal d'urgence pour déclencher une génération du signal.

4. Actionneur (100) selon l'une quelconque des revendications précédentes,
**caractérisé en ce que**
le stockage d'énergie de secours (130) est configuré pour stocker de l'énergie électrique.

5. Actionneur (100) selon la revendication 4,
**caractérisé en ce que**
le stockage d'énergie de secours (130) est configuré pour stocker l'énergie au sein d'un ou de plusieurs des dispositifs suivants :
- un condensateur,
- un supercondensateur,
- un ultracondensateur,
- une batterie rechargeable.

6. Actionneur (100) selon l'une quelconque des revendications précédentes,
**caractérisé en ce que**
le stockage d'énergie de secours (130) stocke de l'énergie mécanique.

7. Actionneur (100) selon l'une quelconque des revendications précédentes, dans lequel l'actionneur (100) comprend une unité de commande électronique (140),
**caractérisé en ce que**
le stockage d'énergie de secours (130) est intégré dans l'unité de commande électronique (140).

8. Dispositif de frein de roue (200), comprenant un frein de roue, et
**caractérisé par**
l'actionneur (100) selon l'une quelconque des revendications précédentes.

9. Procédé de réalisation d'un actionnement de sécurité pour une unité de frein de roue (200) d'un véhicule, dans lequel un actionneur électromécanique (100) comprend un élément d'actionnement (110) pour réaliser un actionnement et est configuré pour recevoir, par l'intermédiaire d'une alimentation électrique (50), une puissance pour réaliser l'actionnement,
et dans lequel un stockage d'énergie de secours (130) est compris au sein de l'actionneur (100), dans lequel l'actionneur (100) comprend un boîtier, et le stockage d'énergie de secours (130) est inclus au sein du boîtier,
le procédé comprenant les étapes de :
stockage (S100), au sein du stockage d'énergie de secours (130), d'énergie suffisante pour amener l'élément d'actionnement (110) à réaliser un actionnement de frein complet au moins une fois ;
fourniture (S200) d'énergie nécessaire par l'élément d'actionnement (110) dans une situation d'urgence.
